**Europäisches Patentamt**

**European Patent Office**

**Office européen des brevets**

(19)

(11) Veröffentlichungsnummer : **0 048 691**
**B1**

(12) **EUROPÄISCHE PATENTSCHRIFT**

(45) Veröffentlichungstag der Patentschrift :
**11.12.85**

(51) Int. Cl.⁴ : **C 01 F 7/44, C 04 B 35/10**

(21) Anmeldenummer : **81810375.6**

(22) Anmeldetag : **11.09.81**

(54) **Verfahren zur Herstellung von grobkristallinen alpha-Al₂O₃.**

(30) Priorität : **23.09.80 CH 7126/80**

(43) Veröffentlichungstag der Anmeldung :
**31.03.82 Patentblatt 82/13**

(45) Bekanntmachung des Hinweises auf die Patenterteilung : **11.12.85 Patentblatt 85/50**

(84) Benannte Vertragsstaaten :
**AT CH FR GB IT LI NL**

(56) Entgegenhaltungen :
**DE-A- 2 623 482**
**DE-B- 2 850 064**
**DE-C- 932 425**
**DE-C- 1 159 418**
**FR-A- 1 382 000**
**GB-A- 829 602**
**Die Akte enthält technische Angaben, die nach dem Eingang der Anmeldung eingereicht wurden und die nicht in dieser Patentschrift enthalten sind.**

(73) Patentinhaber : **SCHWEIZERISCHE ALUMINIUM AG**

**CH-3965 Chippis (CH)**

(72) Erfinder : **Schepers, Bernhard Peter**
**Roseggerweg 6**
**D-6720 Speyer (DE)**
Erfinder : **Nobbe, Volker**
**Schützenstrasse 39**
**CH-8212 Neuhausen am Rheinfall (CH)**
Erfinder : **Schröder, Bernd**
**Spee Strasse 9**
**D-5000 Köln (DE)**
Erfinder : **Borer, Werner**
**Neustrasse 254**
**CH-8247 Flurlingen (CH)**
Erfinder : **Kullack, Manfred**
**H.-Lautz-Strasse 4**
**D-5010 Bergheim (DE)**

Jouve, 18, rue St-Denis, 75001 Paris, France

## Beschreibung

Die vorliegende Erfindung betrifft ein Verfahren zur Herstellung von grobkristallinen $\alpha$-$Al_2O_3$ mit einem mittleren Kristallitdurchmesser von $> 10\,\mu m$ durch Kalzination von Aluminiumhydroxid in Gegenwart von Fluorverbindungen enthaltenden Katalysatoren.

In der Schleifmittelindustrie besteht ein starkes Bedürfnis nach einkristallinen Korundkörnungen im Bereich von etwa Körnungsnummer 800 bis 200 nach FEPA, entsprechend mittlerer Kristallitgrössen von ca. 10-70 $\mu m$.

Auf die grundsätzliche Möglichkeit, die gewünschten Korundeinkristalle direkt bei der Tonerdeproduktion herzustellen, um damit den sowohl technisch wie wirtschaftlich aufwendigen Weg über Schmelz- und Sinterprozesse zu umgehen, ist bereits mehrfach hingewiesen worden. Bisher scheiterten alle wirtschaftlich vertretbaren Bemühungen an der unzureichenden Grösse der Kristalle und/oder ihrem ausgesprochen dünntafeligen Habitus.

Die vorliegende Erfindung überwindet diese Schwierigkeiten. Die erfindungsgemässe Tonerde besteht aus dicktafeligen, von natürlichen Flächen begrenzten Korundeinkristallen im oben angeführten Korngrössenbereich und lässt sich kostengünstig herstellen.

Tonerde wird grosstechnisch üblicherweise nach dem Bayer-Verfahren produziert. Durch Aufschluss von Bauxit in Natronlauge und anschliessende Fällung wird Aluminiumhydroxid in Form von Agglomeraten der Grösse bis um 100 $\mu m$ erhalten. Durch Kalzination in Dreh- oder Wirbelschichtöfen wird das Aluminiumhydroxid in Tonerde überführt. Dabei strebt man meist eine vollständige Umwandlung zum $\alpha$-Aluminiumoxid an, was ab etwa 1 200 °C und darüber sicher der Fall ist.

Eine derartig hergestellte Tonerde ist sehr feinteilig — selten liegen die Kristallgrössen über 5 $\mu m$ — und für den oben genannten Verwendungszweck nicht oder nur sehr beschränkt z. B. als Poliermittel, einsetzbar.

Es hat nicht an Versuchen gefehlt, dennoch über das Bayer-Verfahren zu Tonerdeprodukten zu gelangen, die insbesondere Schleif- und Läppeigenschaften aufweisen. Es ist bekannt, dass die Zugabe von sogenannten Kalzinationshilfsmitteln oder Mineralisatoren in kleinen Mengen die Umwandlung zum $\alpha$-Aluminiumoxid beschleunigt und/oder die Umwandlungstemperatur senkt. Gleichzeitig findet eine Verschiebung der Kristallitgrössenverteilung zu grösseren Partikeln hin statt.

Als wirksame Verbindungen sind in diesem Zusammenhang insbesondere die Fluoride NaF, $CaF_2$ $AlF_3$ und $Na_3AlF_6$. Nach der DE-AS 1 159 418 haben einige Zehntel Prozent Fluorwasserstoffgas in der Ofenatmosphäre die gleiche Wirkung.

Je nach Durchlauf- beziehungsweise Aufheizgeschwindigkeit und Art und Menge der Fluorverbindungen kann die Temperatur der Umwandlung zur $\alpha$-Aluminiumoxid und dessen Kristallitgrösse in beschränktem Rahmen variiert werden.

Nach der DE-AS 2 850 064 ist die Kristallitgrösse auch von der Agglomeratgrösse des Aluminiumhydroxids abhängig. Durch Mehrfachkristallisation unter Verwendung von Impfgut — bestehend aus bereits kalziniertem Produkt —, fluorhaltigen Zusätzen und Aluminiumhydroxidagglomeraten $> 60\,\mu m$ sollen Korundkristalle, $\alpha$-$Al_2O_3$, mit Durchmessern D als grösste Ausdehnung senkrecht zur c-Achse von 16 bis maximal 250 $\mu m$ bei Durchmesser/Höhen-Verhältnissen D/H zwischen 3 und 7 hergestellt werden können, wobei die Höhe H die grösste Ausdehnung parallel zur c-Achse bedeutet.

In der FR-PS 1 382 000 wird ein Verfahren zur Herstellung von Aluminiumoxid aus feuchtem Aluminiumoxidhydrat beschrieben. Dabei wird vor der eigentlichen Kalzination im Drehrohrofen das feuchte Hydrat vorgetrocknet. Es wird auch eine Vorrichtung zur Ausführung dieser Vortrocknung beschrieben. Die kalzinierte Tonerde wird für den Elektrolyseprozess zur Herstellung von Aluminium eingesetzt. Während der Vortrocknung wird die freie Feuchtigkeit aus dem Feuchthydrat entfernt, es findet jedoch keine Umwandlung zu grobkristallinem $\alpha$-$Al_2O_3$ statt.

Nach Verfahren, die keine Impfkristalle verwenden, wurden bisher nur $\alpha$-$Al_2O_3$-Kristalle von ausgesprochenen dünntafeligem, hexagonalem Habitus erhalten. Die Kristalle haben bestenfalls einen Durchmesser D von 25 $\mu m$, grösstenteils jedoch nur einen solchen von um 10 $\mu m$. Die Höhe H beträgt bei ausgesuchten Exemplaren etwa ein Viertel des Durchmessers D und bei über 80 % der Kristalle liegt diese nur zwischen ein Sechstel bis ein Zehntel des Durchmessers D.

Der Nachteil derartiger Kristalle für Schleif-, Läpp- und Polierzwecke liegt in der zu kleinen Kristallitgrösse und/oder vor allem in dem hohen Durchmesser zu Höhen-Verhältnis D/H. Plättchenförmige Korundeinkristalle unter einem Durchmesser von 10 $\mu m$ werden kaum von der oberflächenbearbeitenden Industrie gebraucht. Kristalle mit grösseren Durchmessern aber hohem D/H-Verhältnissen zerbrechen während des Einsatzes als Schleifmittel, besonders beim Läppen und Polieren, sehr leicht und bilden dann Schneiden von willkürlicher Geometrie. Der vermeintliche Vorteil der einkristallinen Körnung mit bei allen Kristallen konstanter Schneidengeometrie wegen der natürlichen Flächenausbildung und der hohe spezifische Schneidkantenanteil wird mindestens teilweise zunichte gemacht.

Aus diesem Grunde haben über die Kalzination von Aluminiumhydroxid hergestellte Tonerdeprodukte bisher nicht den erwarteten Eingang in der Oberflächenbearbeitungstechnik gefunden.

Die Erfinder haben sich daher das Ziel gesetzt, ein vorteilhaftes einkristallines Schleif-, Läpp- und Poliermittel aus kalzinierter Tonerde zu schaffen. Insbesondere sollen die Kristalle im Mittel einen Durchmesser D von etwa > 10 μm haben und gleichzeitig ein kleines D/H-Verhältnis aufweisen.

Die Aufgabe der Erfindung besteht darin, ein Verfahren mit einem geeigneten Mineralisator für die Herstellung von Korundkristallen mit der oben angeführten Morphologie zu finden, bei dem kein Impfgut zur Anwendung kommt.

Die Aufgabe wird erfindungsgemäss nach Patentanspruch 1 gelöst.

Das Aluminiumhydroxid hat vorzugsweise einen Alkaligehalt bezogen auf $Al_2O_3$ im Bereich von 0,2-1,4 Gew.-%, insbesondere 0,4-0,8 Gew.-%.

Erstaunlicherweise tritt die Bildung der β-Phase von $Al_2O_3$, $Na_2 \cdot 11\, Al_2O_3$, praktisch nicht auf, obwohl bei Prozessbeginn ein hoher Alkaligehalt von in Maximum bis zu 1,4 Gew.-% bezogen auf $Al_2O_3$ vorliegt. Das kalzinierte Endprodukt aus dem erfindungsgemässen Verfahren, unter Verwendung eines zur β-Phasenbildung befähigten Mineralisators, beispielsweise $NaBF_4$, bestand nach röntgenographischen Untersuchungen praktisch nur aus Korund, $α-Al_2O_3$. Die $β-Al_2O_3$-Interferenz 002 (CuKα, d = 11,3 Å) war in allen Mustern nur schwach sichtbar. Ansonsten sind die Kristalle klar und ohne Inhomogenitäten. Die $α-Al_2O_3$-Interferenzen der Rötgendiffraktogramme waren alle scharf, was als Kennzeichen defektfreier Kristalle gewertet wird.

In vergleichenden Versuchen hat sich gezeigt, dass Aluminiumhydroxid, versetzt mit Natrium-, Bor- und Fluorverbindungen gemeinsam in solchen Mengen, das der Gesamtchemismus dem eingesetzten Natriumtetrafluoroborat entspricht, nicht zur Bildung von Kristallen, wie sie nach der Erfindung vorliegen, befähigt ist, sondern nur Kristalle mit mittleren Durchmessern von 10 bis maximal 20 μm und mit für Schleifzwecke unzureichenden D/H-Verhältnissen von etwa > 8 resultieren. Daraus wird geschlossen, dass nicht der Gesamtchemismus für die Kristallentwicklung nach der Erfindung massgebend ist, sondern dass es wesentlich ist, in welcher Form der Mineralisator bei den höheren Temperaturen vorliegt. Eine Erklärung der vorteilhaften Wirkung des Mineralisators mag darin zu finden sein, dass sich die Salze der Fluoroborsäure erst bei höheren Temperaturen zersetzen. Sie sind während der wesentlichen Entwässerungsphase des Aluminiumhydroxids noch nicht oder nur geringfügig dissoziert, reagieren demzufolge kaum mit dem gebildeten Wasserdampf und werden auch nicht mit diesem aus dem Ofen ausgetragen.

Die Abführung des Mineralisators aus dem Kalzinationsprozess, d. h. konkret aus dem Drehrohr- oder Wirbelschichtofen, wird nahezu vollkommen in dem erfindungsgemässen 2-Stufen-Verfahren unterbunden. Gleichzeitig wird das Auftreten von Fluorwasserstoff durch Dissoziation des Mineralisators, beispielsweise Natriumtetrafluoroborat, $NaBF_4$, im Bereich oberhalb etwa 700 °C wegen nahezu vollständiger Abwesenheit grösserer Wasserdampfmengen vermieden, so dass die Zersetzungsprodukte des Mineralisators kristallwachstumsfördernd wirken können. So begünstigt Natrium das Kristallwachstum der Korundkristalle über die β-Phase, Fluor bewirkt eine Senkung der Umwandlungstemperatur von $γ-Al_2O_3$ zu $α-Al_2O_3$ und Bor reduziert nachträglich den hohen Alkaligehalt durch Bildung leichtflüchtiger Alkaliboratverbindungen.

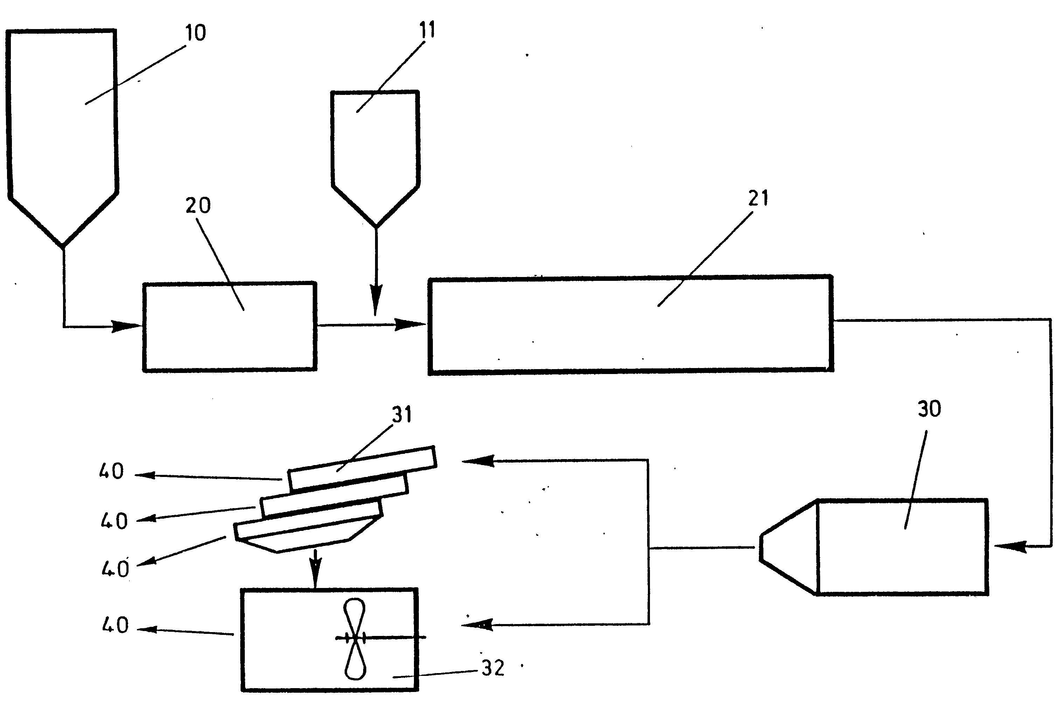

Weitere Vorteile und Einzelheiten der Erfindung ergeben sich aus der nachfolgenden Beschreibung bevorzugter Ausführungsbeispiele sowie anhand der Zeichnung ; diese zeigt schematisch den Ablauf des erfindungsgemässen Verfahrens und beispielhaft die Weiterverarbeitung des Produkts.

Aluminiumhydroxid befindet sich im Silo 10, der Mineralisator im Silo 11. Das Hydroxid wird durch einen Trockner 20 geleitet und gibt dort den grössten Teil des Kristallwassers ab. Das den Trockner 20 verlassende Zwischenprodukt geht zusammen mit dem Mineralisator in den Ofen 21. Der Austrag aus dem Ofen 21 besteht aus Korundagglomeraten mit einer Kristallmorphologie der oben beschriebenen Art. Die Agglomerate werden in an sich bekannter Weise wie z. B. Mahlen 30, Sieben 31, Sichten 32 desagglomeriert und in einkristalline Fraktionen 40 getrennt.

Die Entwässerungstemperatur im Trockner 20 ist relativ unkritisch. Doch soll diese oberhalb etwa 200 °C liegen und nach Möglichkeit 550 °C nicht überschreiten, weil sonst bereits eine starke Umstrukturierung des entstehenden Abbauprodukts einsetzt. Der günstigste Bereich liegt etwa zwischen 250 und 500 °C. Die günstigste Durchlaufzeit des eingegebenen Aluminiumhydroxids beträgt bei 250 °C etwa 3,5 Stunden und bei 500 °C etwa 1 Stunde.

Die Zugabe des Mineralisators zum aus dem Trockner 20 kommenden Zwischenprodukt kann zum Beispiel in der Weise geschehen, dass diskontinuierlich die bestimmte Menge des Mineralisators zu einer vorgesehenen Menge Zwischenprodukt intensiv mit einem Mischer vermengt wird oder kontinuierlich, indem über eine Bandwaage dem Zwischenprodukt, das in den Ofen 21 geht, laufend der Mineralisator zudosiert wird. Eine Qualitätseinbusse des Endprodukts war bei der letzbeschriebenen Art der Zugabe nicht festzustellen.

Dagegen ist es nicht von Vorteil, die Temperatur des Zwischenproduktes stark zu senken oder dieses gar in eine Zwischenlager zu geben und vollends auf Raumtemperatur abkühlen zu lassen. In solchen Fällen zeigten sich häufig milchig-trübe Kristalle im Endprodukt, die zum Teil feine Haarrisse aufwiesen. Aber auch diese Kristalle erwiesen sich für Schleifzwecke als brauchbar, so dass dieser Weg ebenfalls im Rahmen der Erfindung liegend zu sehen ist, obwohl er von vornherein nicht als der optimalste betrachtet wird.

An den Ofen 21 sind keine besonderen Anforderungen bezüglich Typ und Grösse gestellt. Vorteilhafterweiser wird ein Drehrohrofen verwendet, der so gefahren wird, das am Brennerkopf eine Temperatur von ca. 1 350 °C, am Eingang eine solche von 750 °C herrscht. Die Länge des Ofens und/oder die Drehgeschwindigkeit sollte so bemessen sein, dass das Material den Ofen in ca. 2,5 bis 4,5 Stunden durchläuft und sich etwa 1 Stunde im Bereich oberhalb 1 200 °C aufhält. Bei direkter Zugabe des Mineralisators tritt bereits auf den ersten Metern der Ofenreise eine ausreichende Durchmischung mit dem aus dem Trockner 20 kommenden Zwischenprodukt ein ; das Endprodukt war immer homogen.

Wie bereits oben erwähnt wirkt der Mineralisator auch, wenn dieser zusammen mit dem Aluminiumhydroxid in den Trockner 20 eingegeben wird und anschliessend den Kalzinierofen 21 durchläuft. Diese Verfahrensweise entspräche dem üblichen Verfahren unter Verwendung eines einzigen Heizaggregats mit dem Unterschied, dass der Bereich, in dem eine wesentliche Wasserdampfatmosphäre auftritt, durch die Verwendung des Trockners deutlich begrenzt ist.

Diverse Versuche unter Verwendung von Aluminiumhydroxid und des nach dem Trockner zugegebenen. Mineralisators vom Typ $X(BF_4)_n$ führten zur Herstellung von grobkristallinen $\alpha$-$Al_2O_3$ (Korund)-Kristallen, die für Schleif-, Läpp- und Polierzwecke und auch für den Einsatz im Feuerbereich geeignet sind. Beispiele sind mit Betriebsparametern und Ergebnissen in folgender Tabelle zusammengefasst.

(Siehe Beispiele Seite 5 f.)

Beispiele

| Beispiel | Mineralisator | | Trockner-temperatur | $\alpha$-Al$_2$O$_3$ | | $\beta$-Phase (002-Reflex) |
|---|---|---|---|---|---|---|
| | Verbindung | Zusatzmenge (Gew.-%) | (°C) | mittlere Kristallit-grösse (μm) | D/H | |
| 1 | NaBF$_4$ | 0,3 | 400 | 35 | 3 - 6 | schwach |
| 2 | KBF$_4$ | 0,3 | 450 | 35 | 4 - 6 | schwach |
| 3 | NaBF$_4$ | 0,3 | 400 | 60 | 4 - 6 | sehr schwach |

0 048 691

Die Trocknertemperatur wurde für jeden spezifischen Mineralisator angepasst, um eine Zersetzung möglichst zu vermeiden. Der Temperaturgradient des Drehrohrofens war dagegen für alle Beispiele gleich ; am Eingang 750 °C, am Austritt 1 350 °C. In allen Beispielen 1-3 wurde dasselbe Aluminiumhydroxid, nach dem Bayer-Prozess hergestellt, verwendet. Es hatte eine mittlere Agglomeratgrösse von < 60 μm und enthielt 0,4 Gew.% $Na_2O$ bezogen auf $Al_2O_3$.

In den Beispielen 1 und 2 wurden je 300 kg Ausgangsmaterial genommen und mit etwa 40 kg pro Stunde chargiert. Der Mineralisator wurde dem aus dem Trockner kommenden Zwischenprodukt charpenweise in einem Intensivmischer (Typ R7, Firma Eirich, Hardheim, BRD) zugemischt. Dabei kühlte sich das Material um ca. 120 °C ab. Das Endprodukt aus diesen Versuchen enthielt milchig-trübe Kristalle.

Beispiel 3 ist ein Betriebsversuch. Das Ausgangsmaterial wurde mit etwa 6,5 t pro Stunde in den Trockner eingegeben, der Mineralisator nach dem Trockner kontinuierlich zudosiert. Die Durchlaufzeit im Trockner betrug etwa 1 Stunde, im Drehrohrofen etwa 4,5 Stunden. Der Ofen hatte am Eingang eine Temperatur von 750 °C, in der Mitte 800 °C und am Austrag 1 350 °C.

## Patentanspruch

Verfahren zur Herstellung von grobkristallinem $\alpha$-$Al_2O_3$ mit einem mittleren Kristallitdurchmesser von > 10 μm durch Kalzination von Aluminiumhydroxid in Gegenwart von Fluorverbindungen enthaltenden Mineralisatoren, dadurch gekennzeichnet, dass in einer ersten Stufe Aluminiumhydroxid einer mittleren Agglomeratgrösse von < 60 μm im Temperaturbereich von > 200 bis 550 °C vorgetrocknet wird, und in einer zweiten Stufe unter Zusatz einer Mineralisatorverbindung vom Typ $X(BF_4)n$, wobei X für $NH_4$, ein Alkali- oder ein Erdalkalimetall steht und n die formale Wertigkeit von X ist, in einer Menge von 0,1-0,4 Gew.-% während 2,5-4,5 Stunden in einem Bereich zwischen 750 °C und einer über der Umwandlungstemperatur zu $\alpha$-$Al_2O_3$ liegenden Temperatur, davon etwa eine Stunde oberhalb 1 200 °C gehalten wird.

## Claim

A method of production of coarsely crystalline $\alpha$-$Al_2O_3$ having a mean crystallite diameter of > 10 μm through calcination of aluminium hydroxide in the presence of mineralizers containing fluorine compounds, characterized in that in a first stage aluminium hydroxide of a mean agglomerate size of < 60 μm is predried in the temperature range from > 200 up to 550 °C, and in a second stage with the addition of a mineralizer compound of $X(BF_4)_n$ type, where X stands for $NH_4$, an alkaline metal or an alkaline earth metal and n is the formal valency of X, in an amount of 0.1-0.4 % by wt., is held for 2.5-4.5 hours within a range between 750 °C and a temperature lying above the temperature of conversion to $\alpha$-$Al_2O_3$, about one hour of that being above 1 200 °C.

## Revendication

Procédé de préparation d'$\alpha$-alumine en gros cristaux, à un diamètre de cristallite moyen supérieur à 10 μm par calcination de l'hydroxyde d'aluminium en présence d'agents minéralisants contenant des composés du fluor, caractérisé en ce que, dans un premier stade opératoire, on soumet à séchage préalable de l'hydroxyde d'aluminium à une dimension moyenne d'agglomérats inférieure à 60 μm dans un intervalle de température allant de plus de 200 jusqu'à 550 °C et, dans un deuxième stade opératoire, avec adjonction d'un agent minéralisant consistant en un composé du type $X(BF_4)_n$ dans lequel X représente $NH_4$, un métal alcalin ou un métal alcalino-terreux et n représente la valence de X, en quantité de 0,1 à 0,4 % en poids, on le maintient pendant 2,5 à 4,5 h dans un intervalle compris entre 750 °C et une température supérieure à la température de conversion en $\alpha$-$Al_2O_3$, dont environ 1 h au-dessus de 1 200 °C.

0 048 691